# NEUE EUROPÄISCHE PATENTSCHRIFT

(11) **EP 1 737 724 B2**
(45) Veröffentlichungstag und Bekanntmachung des Hinweises auf die Entscheidung über den Einspruch: **19.10.2011**
(45) Hinweis auf die Patenterteilung: 26.03.2008
(21) Anmeldenummer: 05743058.9
(22) Anmeldetag: 15.04.2005
(51) Int. Cl.: B62K 19/02

(54) **SATTELROHR FÜR EINEN FAHRRADRAHMEN**
SADDLE TUBE FOR A BICYCLE FRAME
TUBE DE SELLE POUR CADRE DE VELO

(30) Priorität: 19.04.2004 DE 102004019381
(43) Veröffentlichungstag der Anmeldung: 03.01.2007
(73) Patentinhaber: Canyon Bicycles GmbH, 56073 Koblenz (DE)
(72) Erfinder: SMOLIK, Hans-Christian, 84163 Freinberg-Marklkofen (DE)
(74) Vertreter: von Kreisler Selting Werner
(86) Internationale Anmeldenummer: PCT/EP2005/051675
(87) Internationale Veröffentlichungsnummer: WO 2005/100141

(56) Entgegenhaltungen:
- CH-A- 266 540
- DE-A1- 10 128 796
- DE-A1- 19 712 326
- DE-B4- 4 315 084
- DE-C- 105 016
- DE-C- 743 544
- DE-T5-112006 000 861
- DE-U1- 9 313 395
- DE-U1- 9 321 324
- FR- - 266 540
- FR-A- 895 046
- FR-A- 2 477 495
- GB-A- 608 223
- GB-A- 2 247 869
- JP-A- 11 001 191
- US-A- 343 598
- US-A- 5 016 895
- US-A- 5 255 932
- US-A- 6 139 038
- 'Behauptete offenkundige Vorbenutzung KESTREL bicycle 200SC'
- 'Behauptete offenkundige Vorbenutzung KESTREL bicycle 200SCI'
- 'Behauptete offenkundige Vorbenutzung KLEIN Aura XV'
- 'Behauptete offenkundige Vorbenutzung KLEIN Quantum Pro'

## Beschreibung

Die Erfindung betrifft ein Sattelrohr für einen Fahrradrahmen, insbesondere einen Rennradrahmen. Ferner betrifft die Erfindung einen Fahrradrahmen, insbesondere einen Rennradrahmen, mit Sattelrohr.

Ein herkömmlicher Fahrradrahmen weist ein Oberrohr und ein Unterrohr auf, die über ein Gabelaufnahmeelement miteinander verbunden sind. Ferner weist der Fahrradrahmen ein Sattelrohr auf, das im hinteren Bereich des Fahrradrahmens angeordnet ist und mit dem Unterrohr sowie dem Oberrohr verbunden ist. Hierbei erfolgt die Verbindung zwischen Sattelrohr und Unterrohr ggf. über ein Tretlager-Aufnahmeelement. In das Sattelrohr wird von oben die den Sattel tragende Sattelstütze eingesteckt. Insbesondere bei Rennrädern treten im Sattelrohr große Biegebelastungen auf.

Aus CH 26 65 40 ist es bekannt, ein Sattelohr derart auszugestalten, dass sich der Querschnitt in Richtung des Tretlagers verjüngt. Ferner ist das Sattelrohr hierbei queroval ausgebildet, so dass am tretlagerseitigen Ende des Sattelrohrs die Breite des Sattelrohrs quer zur Rahmenlängsrichtung größer ist als in Rahmenlängsrichtung. Hierdurch sollen die auftretenden Kräfte und Momente von dem Sattelrohr besser aufgenommen bzw. übertragen werden können. Da die maximale Breite des Sattelrohres am tretlagerseitigen Ende insbesondere auf Grund des Kettenblatts und auf Grund des erforderlichen Verschwenkungsraums für den Kettenumwerfer begrenzt ist, ist das in CH 26 65 40 beschriebene Sattelrohr in seinen Abmessungen lediglich in Rahmenlängsrichtung verringert, quer zur Rahmenlängsrichtung jedoch nicht größer als bei herkömmlichen Rädern. Hinsichtlich der auftretenden Biegebelastungen insbesondere am tretlagerseitigen Ende des Sattelrohrs führt die in CH 26 65 40 dargestellte querovale Ausgestaltung diesbezüglich nicht zu Verbesserungen.

Ferner ist aus GB 608,223 ein Sattelrohr mit den Merkmalen des Oberbegriffes des Anspruchs 1 bekannt, das an seinem sattelstützseitigen Ende einen kreiszylindrischen Querschnitt aufweist, der an dem tretlagerseitigen Ende in einen elliptischen Querschnitt übergeht. Hierbei erfolgt ein Verringern der Breite des Sattelrohrs in Rahmenlängsrichtung und ein Verbreitern des Sattelrohrs quer zur Rahmenlängsrichtung.

Untersuchungen haben ergeben, dass die Biegebelastungen am tretlagerseitigen Ende des Sattelrohres, d. h. an dem dem Tretlager zugewandten Ende des Sattelrohres, das üblicherweise mit dem Tretlageraufnahmeelement verbunden ist, am größten sind. Die Biegebelastungen nehmen sodann kontinuierlich nach oben hin, d. h. in Richtung des sattelstützseitigen Endes, bzw. in Richtung des Oberrohres, ab. Die in dem Sattelrohr auftretenden Biegebelastungen werden in das Tretlager-Aufnahmeelement übertragen, wodurch die Tretlagersteifigkeit beeinflusst wird. Das Sattelrohr sollte daher einen möglichst großen Durchmesser aufweisen. Der Durchmesser des Sattelrohres ist an seinem tretlagerseitigem Ende jedoch begrenzt, da ausreichend Platz zum Verschwenken des Kettenumwerfers vorgesehen werden muss. Auch im mittleren Bereich des Sattelrohres ist der Durchmesser beschränkt, da ansonsten der Hinterradreifen am Sattelrohr schleifen würde. Eine Vergrößerung des Sattelrohrdurchmessers in diesem Bereich würde somit eine Verlängerung des Hinterbaus erforderlich machen, die negative Einflüsse auf die Fahreigenschaften des Fahrrades haben kann. Bekannte Sattelrohre weisen daher einen maximalen Außendurchmesser von 35 mm auf.

Aufgabe der Erfindung ist es, ein Sattelrohr zu schaffen, durch das die Tretlagersteifigkeit verbessert werden kann.

Die Lösung der Aufgabe erfolgt erfindungsgemäß durch die Merkmale des Anspruchs 1.

Das erfindungsgemäße Sattelrohr weist an seinem tretlagerseitigen Ende quer zur Rahmenlängsrichtung, bzw. zur Fahrtrichtung, eine größere Breite auf als in Rahmenlängsrichtung. Vorzugsweise ist das Sattelrohr an seinem tretlagerseitigen Ende zumindest teilweise quer-oval ausgebildet. Durch das Verbreitern des Sattelrohres quer zur Rahmenlängsrichtung kann die Biegesteifigkeit des Sattelrohrs verbessert werden. Dies hat auch eine Verbesserung der Tretlagersteifigkeit zur Folge. Da das Sattelrohr erfindungsgemäß nur quer zur Rahmenlängsrichtung verbreitert wurde und in Rahmenlängsrichtung vorzugsweise eine übliche Breite aufweist, schleift das Hinterrad auch ohne Veränderung des Hinterbaus nicht an dem Sattelrohr.

Um die Lage der Kettenblätter sowie die Lage des Kettenumwerfers beibehalten zu können, weist das Sattelrohr kettenblattseitig, d. h. an der im eingebauten Zustand dem Kettenblatt zugewandten Seite eine Abflachung auf. Bei einem Sattelrohr, das ohne Abflachung eine Breite quer zur Rahmenlängsrichtung von 45 - 55 mm, vorzugsweise 48 -52 mm aufweisen würde, erfolgt eine Abflachung auf eine Breite von 35 - 40 mm, vorzugsweise von 36, 5 - 38, 5 mm.

Die Breite des Sattelrohres in Rahmenlängsrichtung beträgt vorzugsweise 30 - 40 mm und besonders bevorzugt 32, 5 - 37, 5 mm.

Da die erfindungsgemäße Ausgestaltung des Sattelrohres derart gewählt ist, dass die Breite des Sattelrohres in Fahrtrichtung bzw. in Rahmenlängsrichtung erhalten bleibt und nicht verringert wird und zusätzlich eine Verbreiterung des Sattelrohres quer zur Rahmenlängsrichtung erfolgt, können erheblich größere Kräfte und Momente von dem Sattelrohr insbesondere im Bereich des Tretlagers aufgenommen werden. Hierbei ist auf Grund der erfindungsgemäßen Ausgestaltung, insbesondere der kettenseitigen Abflachung des Sattelrohrs, gewährleistet, dass die üblichen Rahmengeometrien, wie die Ausgestaltung des Hinterbaus, beibehalten werden können. Dies ist für die Fahreigenschaften von großer Bedeutung. Auf Grund der erfindungsgemäßen Abflachung am tretlagerseitigen Ende des Sattelrohrs ist eine Änderung der Konstruktion der Kettenräder sowie der Umwerfer und insbesondere auch der Schaltung nicht erforderlich. Durch die erfindungsgemäße Ausgestaltung des Sattelrohrs kann somit eine bessere Aufnahme von Kräften und Momenten sowie eine Erhöhung der Tretlagersteifigkeit erzielt werden, ohne dass hierdurch Folgekosten oder negative Einflüsse durch erforderliche Umkonstruktionen anderer Bauteile hervorgerufen werden.

Das sattelstützseitige Ende, d.h. das Ende des Sattelrohres, in das die Sattelstütze ein gesteckt wird, ist kreiszylindrisch ausgebildet. Hierbei ist der Durchmesser des Sattelrohres vorzugsweise über einen sattelstützseitigen Bereich konstant. Der Bereich weist vorzugsweise eine Länge von mindestens 8 cm, vorzugsweise mindestens 10 cm und besonders bevorzugt mindestens 12 cm auf. Hierbei beträgt der Außendurchmesser des Sattelrohres in dem sattelstützseitigen Bereich vorzugsweise 32 - 38 mm. Der Innendurchmesser ist an den Außendurchmesser der Sattelstütze angepasst, wobei vorzugsweise möglichst Sattelstützen mit einem großen Durchmesser verwendet werden, wobei die derzeitig gängigste Sattelstütze mit dem größten Durchmesser einen Aussendruchmesser von ca. 31, 6 mm aufweist. Auf Grund der runden Ausgestaltung des Sattelrohrs in diesem Bereich ist ein einfaches und kostengünstiges Klemmen der Sattelstütze möglich.

Vorzugsweise weist das Sattelrohr in einem tretlagerseitigen Bereich in Längsrichtung ebenfalls einen konstanten Querschnitt auf. Vorzugsweise ist der Querschnitt über eine Länge von mehr als 8 cm, besonders bevorzugt mehr als 12 cm und insbesondere mehr als 15 cm konstant. Der Übergang zwischen dem tretlagerseitigem Bereich und dem sattelstützseitigen Bereich des Sattelrohres kann kontinuierlich erfolgen. Vorzugsweise ist der Übergangsbereich im Wesentlichen konisch ausgebildet. Die in dem tretlagerseitigem Bereich des Sattelrohres vorgesehene Abflachung ragt vorzugsweise in den Übergangsbereich hinein. Vorzugsweise reicht die Abflachung bis zur Grenze zwischen dem Übergangsbereich und dem sattelstützseitigen Bereich des Sattelrohres. Hierbei ist es besonders bevorzugt, dass die Abflachung derart ausgebildet ist, dass ein stufenfreier Übergang zwischen dem Übergangsbereich und dem sattelstützseitigen Bereich realisiert ist.

Unabhängig von den vorstehend beschriebenen bevorzugten Abmessungen des Sattelrohres nimmt die Breite des erfindungsgemäßen Sattelrohres ausgehend von dem Tretlager in Richtung des sattelstützrohrseitigen Endes ab. Hierbei kann das Abnehmen der Außenabmessung kontinuierlich oder in einzelnen Schritten erfolgen, so dass die Außenabmessungen quer zur Fahrtrichtung im tretlagerseitigen Bereich konstant sind, im Übergangsbereich kontinuierlich geringer werden und im sattelstützrohrseitigen Bereich wieder konstant sind. Vorzugsweise nehmen die Außenabmessungen des Sattelstützrohres ausgehend vom Tretlager jedoch nie zu. Sofern die Außenabmessungen in den einzelnen Bereichen konstant sind, ist der Übergang zwischen diesen Bereichen erfindungsgemäß vorzugsweise stufenfrei. Ferner treten in diesem Bereich vorzugsweise keine Kanten auf, um erhöhte Biegebelastungen in diesen Bereichen zu vermeiden.

Die Herstellung des erfindungsgemäßen Sattelrohres kann aus Kunststoff, insbesondere aus einem faserverstärktem Kunststoff und besonders bevorzugt aus Carbon erfolgen, wobei die Herstellung vorzugsweise mit Hilfe einer entsprechenden Form erfolgt.

Ebenso kann das Sattelrohr aus einem metallischen Werkstoff, vorzugsweise Alluminium, hergestellt werden. Hierbei wird ein herkömmliches Rohr verwendet, das im sattelstützseitigen Bereich einen geringeren Durchmesser als im tretlagerseitigem Bereich aufweist. Beispielsweise beträgt der Durchmesser des Sattelrohrs im sattelstützseitigen Bereich 35 mm und im tretlagerseitigen Bereich 42,5 mm. Dazwischen ist ein konischer Übergangsbereich vorgesehen. Hierbei erfolgt die Herstellung eines derartigen Rohres vorzugsweise durch Aufweiten eines zylindrischen Rohres mit konstantem Außendurchmesser. Dies kann durch Einführen bzw. Einschlagen eines entsprechenden Stempels in das Rohr erfolgen. Je nach Ausgestaltung ist der Stempel konisch oder weist an dem Übergangsbereich entsprechend einen konischen Bereich und einen dem tretlagerseitigen Bereich entsprechenden zylindrischen Bereich auf. Unabhängig von den gewählten Durchmessern wird das Sattelrohr in einem nächsten Herstellungsschritt im tretlagerseitigem Bereich, z. B. durch Zusammendrücken, ovalisiert. Beispielsweise erfolgt das Ovalisieren auf eine große Breite von 50 mm und eine kurze Breite von 35 mm. Anschließend wird im nächsten Verfahrensschritt eine Abflachung durch Andrücken der entsprechenden Fläche hergestellt. Hierbei erfolgt das Andrücken der Abflachung vorzugsweise derart, dass der Abstand zwischen der Abflachung und einer Längsachse des Sattelrohres im tretlagerseitigen Bereich dem Radius bzw. halben Durchmesser des Sattelrohres im sattelstützseitigen Bereich entspricht. Bei einem sattelstützseitigen Außendurchmesser von 35 mm beträgt dieser Abstand somit 17,5 mm.

Ein wesentlicher Vorteil des erfindungsgemäßen Sattelrohrs besteht darin, dass Untersuchungen ergeben haben, dass gegenüber einem Sattelrohr mit konstantem Durchmesser von 35 mm mit Hilfe des erfindungsgemäßen Sattelrohres die Tretlagersteifigkeit um ca. 20 % erhöht werden kann. Dies ist bei gleichem Gewicht der Fall, wobei sich die Wandstärke des Sattelroh res hierbei im tretlagerseitigen Bereich auf Grund der Umfangsvergrößerung sogar verringert.

Auf Grund der erfindungsgemäß vorgesehenen Abflachung auf der Kettenblattseite erfolgt bei der Herstellung des Sattelrohres aus metallischen Werkstoffen, wie Aluminium, eine Materialverdickung in diesem Bereich. Dies ist insbesondere zur Befestigung des Kettenumwerfers vorteilhaft. Vorzugsweise wird daher auch bei der Herstellung des erfindungsgemäßen Sattelrohres aus Kunststoff im Bereich der Abflachung eine größere Wandstärke vorgesehen. Hierbei kann die Befestigung des Kettenumwerfers bei Sattelrohren aus Kunststoff, insbesondere Karbon, durch Verkleben erfolgen. Zusätzlich oder anstelle des Verklebens kann ein Befestigen des Kettenumwerfers durch Nieten erfolgen. Dies ist auch bei metallischen Sattelrohren bevorzugt.

Ferner betrifft die Erfindung einen Fahrradrahmen, insbesondere einen Rennradrahmen mit einem Oberrohr und einem über ein Gabelaufnahmeelement mit dem Oberrohr verbundenen Unterrohr. Zwischen dem Oberrohr und dem Unterrohr ist ein Sattelrohr angeordnet, wobei die Verbindung zwischen dem Sattelrohr und dem Unterrohr ggf. über ein Tretlageraufnahmeelement erfolgt. Das Sattelrohr ist, wie vorstehend beschrieben, erfindungsgemäß ausgebildet bzw. weitergebildet.

Nachfolgend wird die Erfindung an Hand einer bevorzugten Ausführungsform unter Bezugnahme auf die anliegenden Zeichnungen näher erläutert.

Es zeigen:

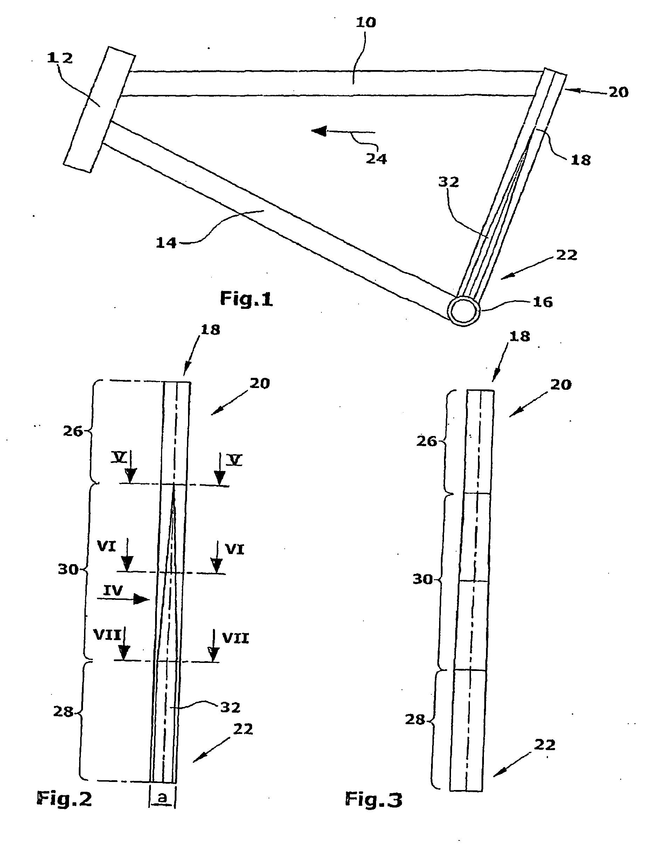

- Figur 1: eine schematische Seitenansicht eines Fahrradrahmens mit erfindungsgemäßem Sattelrohr,
- Figur 2: eine vergrößerte schematische Seitenansicht des Sattelrohres entsprechend Figur 1,
- Figur 3: eine schematische Seitenansicht der Rückseite des Sattelrohres bezüglich Figur 1,
- Figur 4: eine schematische Seitenansicht des Sattelrohres in Richtung des Pfeils IV in Figur 2,
- Figur 5: eine schematische Schnittansicht entlang der Linie V -V in Figur 2,
- Figur 6: eine schematische Schnittansicht entlang der Linie VI - VI in Figur 2 und
- Figur 7: eine schematische Schnittansicht entlang der Linie VII - VII in Figur 2.

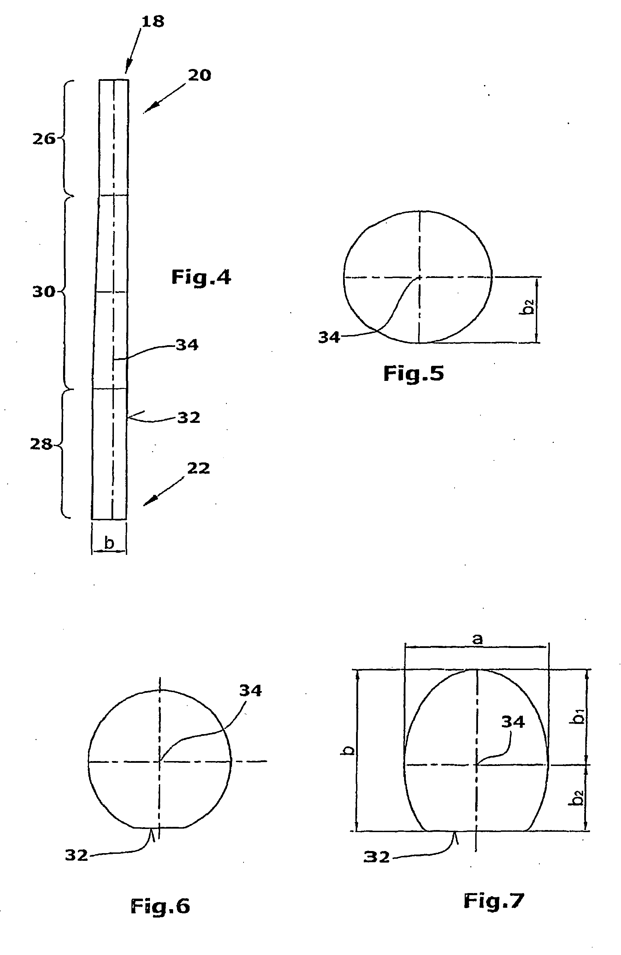

Ein Fahrradrahmen weist ein Oberrohr 10 auf, das über ein Gabelaufnahmeelement 12 mit einem Unterrohr 14 verbunden ist. Das Unterrohr 14 ist im dargestellten Ausführungsbeispiel über ein Tretlageraufnahmeelement 16 mit einem Sattelrohr 18 verbunden. Das Sattelrohr 18 ist an seinem sattelstützseitigem Ende 20, d. h. dem Ende des Sattelrohres 18, in das eine einen Sattel tragende Sattelstütze eingesteckt werden kann, mit dem Oberrohr 10 verbunden. An dem gegenüberliegenden Ende, dem tretlagerseitigem Ende 22, ist das Sattelrohr 18 im dargestellten Ausführungsbeispiel mit dem Tretlageraufnahmeelement 16 verbunden. Das tretlagerseitige Ende 22 kann beispielsweise auch mit dem Unterrohr 14 verbunden sein. Ferner ist eine Verbindung sowohl mit dem Unterrohr 14 als auch mit dem Tretlageraufnahmeelement 16 möglich. Das Sattelrohr 18 weist erfindungsgemäß an seinem tretlagerseitigem Ende 22 quer zur Ranmenlängsrichtung 24 eine größere Breite b auf als die Breite a in Rahmenlängsrichtung 24 (Figur 7). Hierbei handelt es sich im dargestellten Ausführungsbeispiel um einen teilweise quer-oval ausgebildeten Bereich.

Das Sattelrohr 18 weist an seinem sattelstützseitigem Ende 20 einen sattelstürzseitigen Bereich 26 und an seinem tretlagerseitigem Ende 22 einen tretlagerseitigen Bereich 28 auf. Zwischen den beiden Bereichen 26, 28 ist ein Übergangsbereich 30 vorgesehen. Der tretlagerseitige Bereich 28 weist über seine gesamte Länge einen konstanten Querschnitt auf, wie er in Figur 7 dargestellt ist. Der sattelstützseitige Bereich 26 weist ebenfalls über seine gesamte Länge einen konstanten Querschnitt auf. Dieser ist entsprechend Figur 5 rund. Der Übergangsbereich 30 ist im Wesentliche konisch ausgebindet und verjüngt sich ausgehend vom tretlagerseitigem Bereich 28 in Richtung des sattelstützseitigen Bereichs 26.

Im dargestellten Ausführungsbeispiel entspricht die kleinere Breite a im tretlagerseitigen Bereich 28 des Sattelrohres 18 dem Durchmesser im sattelstützseitigen Bereich 26.

Gemäß einer besonders bevorzugten Ausführungsform der Erfindung weist das Sattelrohr 18 zu mindest im tretlagerseitigem Bereich 28 eine Abflachung 32 auf, um genügend Raum für die Kettenblätter und die Umwerferhebel zu schaffen. Im dargestellten Ausführungsbeispiel beträgt die Abflachung bezogen auf ein volles Oval 7,5 mm. Dies bedeutet, dass bezogen auf die Längsseite 34 des Sattelrohres ein Abstand b₁ (Figur 7) 25 mm und ein Abstand b₂ 17, 5 mm beträgt, d. h. dem Radius des Sattelrohrs im sattelstützseitigen Bereich 26 (Fig. 5) entspricht. Vorzugsweise ist die Abflachung im Bereich von 5 - 9 mm. Die Abflachung erstreckt sich vorzugsweise sowohl über den tretlagerseitigen Bereich 28 als auch über den Übergangsbereich 30. Hierbei erstreckt sich die Abflachung vorzugsweise über mehr als die Hälfte der gesamten Länge des Sattelrohres.

Vorzugsweise erstreckt sich die Abflachung auch in den Übergangsbereich 30, so dass in der in Figur 4 dargestellten Seitenansicht die Abflachung stufenfrei in den sattelstützseitigen Bereich 26 übergeht. Kettenblattseitig liegt eine sich in Längsrichtung des Sattelrohres erstreckende Mantel linie des sattelstützseitigen Bereichs 26 somit in der Ebene der Abflachung.

## Patentansprüche

1. Sattelrohr für einen Fahrradrahmen, insbesondere einen Rennradrahmen, wobei das Sattelrohr (18) an seinem sattelstützseitigen Ende (20) kreiszylindrisch ausgebildet ist und an seinem tretlagerseitigem Ende (22) quer zur Rahmenlängsrichtung (24) eine größere Breite (b) als in Rahmenlängsrichtung (24) aufweist,
**dadurch gekennzeichnet,**
**dass** das Sattelrohr (18) eine kettenblattseitige Abflachung (32) aufweist, um genügend Raum für die Kettenblätter und den Umwerfhebel des Kettenumwerfers zu schaffen.

2. Sattelrohr nach Anspruch 1, **dadurch gekennzeichnet, dass** das tretlagerseitige Ende (22) zumindest teilweise quer-oval ausgebildet ist.

3. Sattelrohr nach einem der Anspruch 1 oder 2, **dadurch gekennzeichnet, dass** das Sattelrohr (18) in einem tretlagerseitigem Bereich (28) einen in Längsrichtung des Sattelrohres konstanten Querschnitt aufweist.

4. Sattelrohr nach einem der Ansprüche 1 - 3, **dadurch gekennzeichnet, dass** das Sattelrohr (18) in einem sattelstützseitigen Bereich (26) einen in Längsrichtung des Sattelrohres konstanten Querschnitt aufweist.

5. Sattelrohr nach Anspruch 3 oder 4, **dadurch gekennzeichnet, dass** das Sattelrohr (18) zwischen dem tretlagerseitigem Bereich (28) und dem sattelstützseitigen Bereich (26) einen im Wesentlichen konischen Übergangsbereich (30) aufweist.

6. Sattelrohr nach Anspruch 5, **dadurch gekennzeichnet, dass** die Abflachung (32) in den Übergangsbereich (30) hineinragt.

7. Sattelrohr nach einem der Ansprüche 4 - 6, **dadurch gekennzeichnet, dass** die Abflachung (32) derart ausgebildet ist, dass sie stufenfrei in den sattelstützseitigen Bereich (26) übergeht.

8. Sattelrohr nach einem der Ansprüche 1 - 7, **dadurch gekennzeichnet, dass** sich die Abflachung (32) vom tretlagerseitigen Ende (22) des Sattelrohres bis zum sattelstützseitigen Bereich (26) erstreckt.

9. Sattelrohr nach einem der Ansprüche 1 - 8, **dadurch gekennzeichnet, dass** der Abstand (b₂) zwischen einer Längsachse (34) des Sattelrohres und der Abflachung (32) am tretlagerseitigen Ende (22) dem sattelstützseitigen Radius des Sattelrohres entspricht.

10. Fahrradrahmen, insbesondere Rennrad-Rahmen, mit einem Oberrohr (10), einem über ein Gabelaufnahmeelement (12) mit dem Oberrohr (10) verbundenen Unterrohr (14) und einem mit dem Oberrohr (10) und dem Unterrohr (14) verbundenen Sattelrohr (18), nach einem der Ansprüche 1 - 9.

## Claims

1. A saddle tube for a bicycle frame, especially a racing bicycle frame, the saddle tube (18) being shaped circularly cylindrical at its saddle post end (20) and being wider (b) at the bottom bracket end (22) in a direction transverse to the longitudinal direction (24) of the frame than in the longitudinal direction (24) of the frame,
**characterized in that**
the saddle tube (18) has a flat portion (32) at the side of the chain ring to provide sufficient space for the chain wheels and the derailleur lever of the chain wheel derailleur.

2. The saddle tube of claim 1, wherein the bottom bracket end (22) is at least partly shaped as a transverse oval.

3. The saddle tube of one of claims 1 or 2, wherein, in a bottom bracket portion (28), the cross section of the saddle tube (18) is constant in the longitudinal direction of the saddle tube.

4. The saddle tube of one of claims 1-3, wherein, in a saddle post portion (26), the cross section of the saddle tube (18) is constant in the longitudinal direction of the saddle tube.

5. The saddle tube of claim 3 or 4, wherein the saddle tube (18) has a substantially conical transition portion (30) between the bottom bracket portion (28) and the saddle post portion (26).

6. The saddle tube of claim 5, wherein the flat portion (32) extends into the transition portion (30).

7. The saddle tube of one of claims 4-6, wherein the flat portion (32) is configured such that it passes smoothly into the saddle post portion (26).

8. The saddle tube of one of claims 1-7, wherein the flat portion (32) extends from the bottom bracket portion (22) of the saddle tube to the saddle post portion (26).

9. The saddle tube of one of claims 1-8, wherein the distance (b₂) between a longitudinal axis (34) of the saddle tube and the flat portion (32) at the bottom bracket end (22) corresponds to the radius of the saddle tube at the saddle post end.

10. A bicycle frame, especially a racing bicycle frame, comprising a top tube (10) and a down tube (14) connected with the top tube (10) through a fork receiving element (12), and a saddle tube according to one of claims 1-9 connected with the top tube (10) and the down tube (14).

## Revendications

1. Tube de selle pour un cadre de bicyclette, en particulier un cadre de vélo de course, le tube de selle (18) étant, à son extrémité côté appui de selle (20), doté d'une forme cylindrique de section circulaire et présentant, à son extrémité côté pédalier (22), dans une direction transversale à la direction longitudinale (24) du cadre, une largeur (b) plus grande que dans la direction longitudinale (24) du cadre,
**caractérisé en**
**ce que** le tube de selle (18) présente un aplatissement (32) du côté des plateaux de chaine afin de créer suffisamment d'espace pour les plateaux de chaine et le levier du dérailleur avant.

2. Tube de selle selon la revendication 1, **caractérisé en ce que** l'extrémité côté pédalier (22) est dotée d'une forme au moins partiellement ovale en direction transversale.

3. Tube de selle selon l'une des revendications 1 et 2, **caractérisé en ce que** le tube de selle (18) présente, dans une zone côté pédalier (28), une section transversale constante dans la direction longitudinale du tube de selle.

4. Tube de selle selon l'une des revendications 1 à 3, **caractérisé en ce que** le tube de selle (18) présente, dans une zone côté appui de selle (26), une section transversale constante dans la direction longitudinale du tube de selle.

5. Tube de selle selon la revendication 3 ou 4, **caractérisé en ce que** le tube de selle (18) présente, entre la zone côté pédalier (28) et la zone côté appui de selle (26), une zone de transition (30) sensiblement conique.

6. Tube de selle selon la revendication 5, **caractérisé en ce que** l'aplatissement (32) s'avance dans la zone de transition (30).

7. Tube de selle selon l'une des revendications 4 à 6, **caractérisé en ce que** l'aplatissement (32) est configure de telle façon qu'il rejoigne sans discontinuité la zone côté appui de selle (26).

8. Tube de selle selon l'une des revendications 1 à 7, **caractérisé en ce que** l'aplatissement (32) s'étend de l'extrémité côté pédalier (22) du tube de selle jusqu'à la zone côté appui de selle (26).

9. Tube de selle selon l'une des revendications 1 à 8, **caractérisé en ce que** la distance (b₂) entre un axe longitudinal (34) du tube de selle et l'aplatissement (32), à l'extrémité côté pédalier (22), correspond au rayon du tube de selle côté appui de selle.

10. Cadre de bicyclette, en particulier cadre de vélo de course, comprenant un tube supérieur (10), un tube inferieur (14), relié au tube supérieur (10) par l'intermédiaire d'un éminent de réception de fourche (12), et un tube de selle (18) selon l'une des revendications 1 à 9, relié au tube supérieur (10) et au tube inferieur (14).
